# EUROPEAN PATENT APPLICATION

(11) **EP 1 918 722 A2**
(43) Date of publication of application: **07.05.2008**
(21) Application number: 07119746.1
(22) Date of filing: 31.10.2007
(51) Int. Cl.: G01P 1/12, G07C 5/08, G01P 1/14

(54) **Shipping container rotation angle and impact detector**

(30) Priority: 01.11.2006 US 555409
(71) Applicant: Honeywell International, Inc., Morristown, NJ 07962 (US)
(72) Inventor: Velazquez, Felix E., Valrico, FL 33594 (US); Dwyer, Michael D., Seminole, FL 33776 (US); Thornberry, John W., Largo, FL 33773 (US)
(74) Representative: Buckley, Guy Julian

(57) **Abstract**

A method for monitoring a container (102) is disclosed. The method involves recording a plurality of forces experienced by the container with an electronic detection device (104) and storing each recorded experience from the electronic detection device as tracking data, the tracking data comprising a corresponding date and time of occurrence. Based on the tracking data, the method determines when the container is exposed to a predetermined amount of excessive force.

## Description

### BACKGROUND

As commerce and trade increases on a global scale, customer demands for quality control in shipping and handling of their product(s) becomes increasingly important. Sensitive products such as medical equipment, delicate electronics, or other high-value equipment are currently shipped in containers equipped with "Impact Force" detectors. In general, these types of detectors are calibrated glass vials that break upon impact. The calibrated glass vials will release a marking substance when a pre-set impact or shock level is imposed upon the container. Currently, impact force detectors are unable to provide meaningful assessments regarding exposure to excessive shock or impact and general mishandling of the container during shipping.

Many companies currently send a sample package of their product around the world to evaluate how the sample package is handled during a typical shipment. As discussed above, the most common evidence of mishandling is activation of the impact force detectors. There is no evidence of when and where the mishandling occurs, a significant factor if several shippers (couriers) are involved throughout the shipment. Often the sample package is accepted before the recipient is aware of any damage to the product. Without any form of accountability information for each of the couriers involved, ongoing mishandled shipments of sensitive equipment will lead to increases in courier liability and product warranty claims.

### SUMMARY

The following specification addresses a shipping container rotation angle and impact detector that provides shipment handling information. Particularly, in one embodiment, a method for monitoring a container is provided. The method involves recording a plurality of forces experienced by the container with an electronic detection device and storing each recorded experience from the electronic detection device as tracking data, the tracking data comprising a corresponding date and time of occurrence. Based on the tracking data, the method determines when the container is exposed to a predetermined amount of excessive force.

### DRAWINGS

These and other features, aspects, and advantages will become understood with regard to the following description, appended claims, and accompanying drawings where:

FIG. 1 is a block diagram of an embodiment of a shipping container system;

FIG. 2 is a block diagram of an embodiment of a shipping container rotation angle and impact detector in the shipping container system of FIG. 1; and

FIG. 3 is a flow diagram illustrating an embodiment of a method for monitoring a container using the shipping container system of FIG. 1.

### DETAILED DESCRIPTION

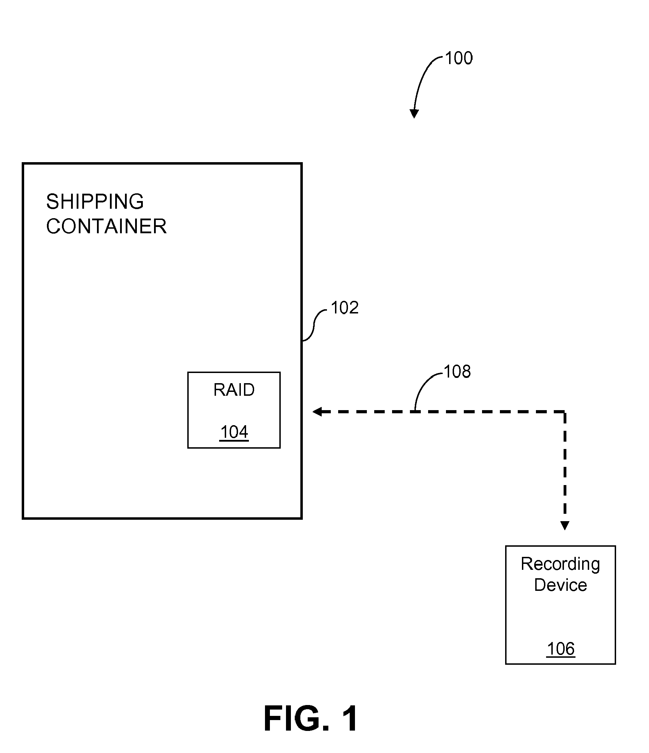

FIG. 1 is a block diagram of an embodiment of a shipping container system 100. The system 100 comprises a shipping container 102 and a recording device 106. The shipping container 102 further comprises a rotation angle and impact detector (RAID) 104. In one implementation, the RAID 104 is permanently attached to the shipping container 102. In alternate implementations, the RAID 104 attaches to the shipping container 102 magnetically, mechanically (via fasteners), and the like. The recording device 106 is responsive to a plurality of rotation angle and impact readings from the RAID 104. The recording device 106 comprises, without limitation, at least one of a portable handheld computing device (for example, a personal digital assistant, or PDA), a wireless computing device, and a personal computer that interfaces with the RAID 104. It is understood that the system 100 is capable of accommodating any appropriate number of shipping containers 102 and RAIDs 104 (for example, one or more shipping containers 102 with at least one RAID 104) in a single shipping container tracking system 100.

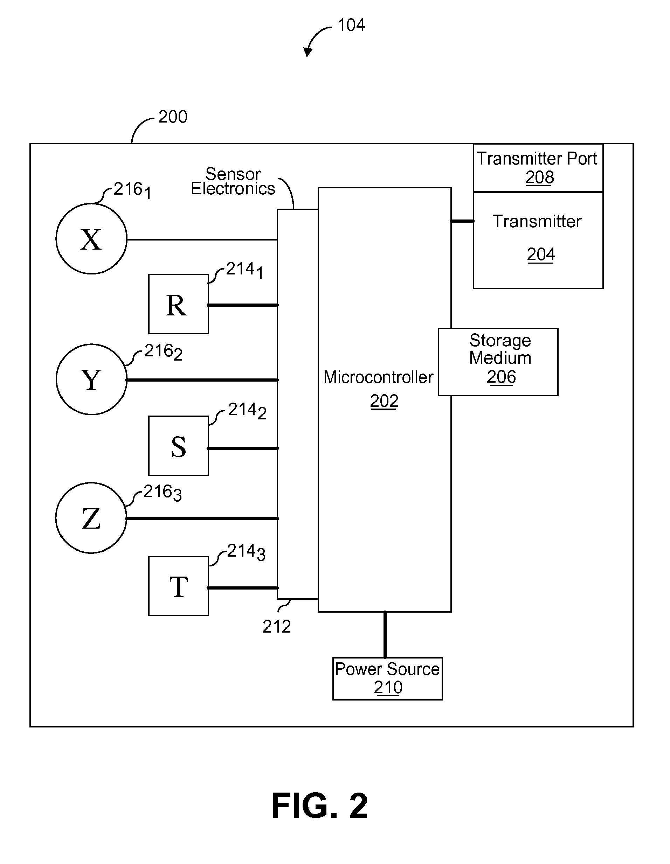

The RAID 104, as further discussed in detail below with respect to FIG. 2, records rotation angles and g-forces (a g-force is the force-equivalent of acceleration due to gravity) imposed on the shipping container 102 during transit. For each record, the RAID 104 includes a timestamp indicating a corresponding date and time of each of the rotation angle and g-force measurements. In the example embodiment of FIG. 1, the timestamps and rotation angle and g-force measurements comprise shipment handling information. During shipment and delivery of the shipping container 102, the RAID 104 transfers the shipment handling information to the recording device 106 on a transfer link 108. In one implementation, the transfer link 108 comprises, without limitation, an infrared link, a wireless communications link, an Ethernet link, and a universal serial bus (USB) link.

The shipment handling information generated by the RAID 104 and captured by the recording device 106 recreates an entire journey of the shipping container 102 by indicating the maximum rotation angles and the g-forces experienced by the shipping container 102 upon potential impacts. The shipment handling information indicates when the shipping container 102 experiences excessive damaging angles or g-forces (for example, excessive shock and impact) during transit. In one implementation, the recording device 106 correlates the shipment handling information with at least one assigned party responsible for handling of the shipping container 102. The system 100 provides evidence of mishandling of the shipping container 102 not readily apparent by external conditions of the shipping container 102.

In operation, the RAID 104 monitors the shipping container 102 for excessive shock and excessive changes in angular rotation (that is, orientation). The RAID 104 records a plurality of forces experienced by the shipping container 102. The RAID 104 samples each of the plurality of forces at a sampling interval. As further discussed in detail with respect to FIG. 2, the RAID 104 measures a plurality of rotation angles of the shipping container 102 with one or more gyroscopes embedded in the RAID 104. The RAID 104 also detects angular acceleration of the shipping container 102 (that is, the g-forces) with one or more accelerometers embedded in the RAID 104. In the example embodiment of FIG. 1, the sampling interval is at least one of a programmable interval rate and a programmable threshold level. The RAID 104 stores each recorded experience as tracking data with a corresponding date and time of each recorded experience (that is, each occurrence). The RAID 104 forms the tracking data by associating the measured plurality of rotation angles and the measured angular accelerations with the corresponding date and time of occurrence. The recording device 106 receives the tracking data from the RAID 104. The tracking data communicated to the recording device 106 indicates when the shipping container 102 is exposed to a predetermined amount of excessive force. In one implementation, the recording device 106 assigns each impact to a responsible party based on the tracking data.

The shipment handling information from the RAID 104 assigns liability in one or more cases of damage based on the timestamps. In the example embodiment of FIG. 1, when the shipping container 102 is handled by several different shippers, the RAID 104 records a time and magnitude of excessive forces experienced by the shipping container 102. The shipment handling information assists in damage assessments for the contents of the shipping container 102 and when the damage occurs. The timestamp identifies which individual shipper (shippers) is responsible for any of the excessive forces experienced by the shipping container 102.

FIG. 2 is a block diagram of an embodiment of the RAID 104 in the shipping container system of FIG. 1. The RAID 104 comprises an electronic sensor package 200 that measures acceleration and rotation angle of the shipping container 102 of FIG. 1. The electronic sensor package 200 comprises a microcontroller 202 that records a plurality of rotation angle and impact recordings from a sensor electronics block 212. The microcontroller 202 is coupled to a storage medium 206, a transmitter 204 comprising a transmitter port 208, and a power source 210. In the example embodiment of FIG. 2, the storage medium 206 comprises, without limitation, at least one of a flash memory circuit and a removable memory device. The transmitter 204 communicates the plurality of rotation angle and impact recordings from the microcontroller 202 to the recording device 106 with the transmitter port 208. The transmitter port 208 comprises, without limitation, at least one of a wireless transmitter port, a USB port, an Ethernet port, and an infrared port. The power source 210 supplies electrical power for the entire length of the journey for the shipping container 102. In the example embodiment of FIG. 2, the power source 210 comprises, without limitation, at least one of a rechargeable battery and a disposable battery.

The sensor electronics block 212 is responsive to gyroscopes 216₁ to 2163 and accelerometers 214₁ to 214₃. Each of the gyroscopes 216₁ to 2163 record angular rotations of the shipping container 102. Each of the accelerometers 214₁ to 2143 record the g-forces experienced by the shipping container 102 upon one or more potential impacts. In one implementation, the RAID 104 comprises the gyroscopes 216₁ (X-axis) and 216₂ (Y-axis) and the accelerometers 214₁ to 214₃, with the gyroscope 2163 (Z-axis) as an option.

In the example embodiment of FIG. 2, each of the gyroscopes 216₁ to 2163 and each of the accelerometers 214₁ to 2143 are sensors fabricated as micro electro mechanical systems (MEMS). MEMS are microscopic structures integrated onto silicon wafers formed on the electronic sensor package 200. The MEMS-based gyroscopes 216₁ to 2163 and the MEMS-based accelerometers 214₁ to 2143 comprise gyroscope and accelerometer measurement electronics and mechanical systems on a single chipset (that is, the electronic sensor package 200) within the RAID 104. As discussed above with respect to FIG. 1, the MEMS-based gyroscopes 216₁ to 2163 and the MEMS-based accelerometers 214₁ to 2143 in the RAID 104 measure the rotation angles and the g-forces imposed on the shipping container 102 during transit. The microcontroller 202 records the rotation angles and the g-forces at a sampling interval. In one implementation, the sampling interval is 100 Hz. At 100 Hz, the RAID 104 creates 600 records/second, 36,000 records/minute, 2.16 million/hour, and 363 million records/week using X, Y, and Z angle measurements from the gyroscopes 216₁ to 2163 and R, S, and T acceleration readings from the accelerometers 214₁ to 214₃. In one or more alternate implementations, the sampling interval occurs when the recorded rotation angles and g-forces exceed at least one predetermined threshold (for example, a set percentage over a recommended rotation angle or g-force).

In operation, the microcontroller 202 processes a plurality of shipment handling readings from the sensor electronics block 212. Each of the shipment handling readings include rotation angle (angular motion) detected by the gyroscopes 216₁ to 2163 and angular acceleration (that is, g-force) measurements detected by the accelerometers 214₁ to 214₃. The microcontroller 202 measures rotation angles from at least two axes of rotation using the gyroscopes 216₁ to 216₃. The microcontroller 202 detects the g-forces imposed on the shipping container 102 with the accelerometers 214₁ to 214₃. The microcontroller 202 records the plurality of shipment handling readings at the sampling interval. At each sampling interval, the microcontroller 202 compiles a timestamp for each of the shipment handling readings. The microcontroller 202 stores the time-stamped shipment handling readings in the storage medium 206.

In one implementation, the microcontroller 202 monitors the plurality of shipment handling readings for excessive rotation angles and g-forces based on the at least one predetermined threshold. In alternate implementations, the recording device 106 monitors the plurality of shipment handling readings provided by the microcontroller 202. The shipment handling readings indicate when the RAID 104 repeatedly experiences the excessive rotation angles and g-forces based on the timestamp associated with each of the shipment handling readings. The microcontroller 202 transfers the plurality of shipment handling readings through at least one of the transmitter 204 (the transmitter port 208) and the storage medium 206 to the recording device 106. In one implementation, the transmitter port 208 transfers the plurality of shipment handling readings by at least one of wireless transmission, infrared transmission, and a USB port connection to the recording device 106. In the same or alternate implementations, the storage medium 206 is a compact flash (CF) memory card (and the like) suitable for transferring the plurality of shipment handling readings directly into the recording device 106. From the timestamps included with each of the shipment handling readings, the recording device 106, in one implementation, determines which party is responsible for handling the shipping container 102 at a time of impact.

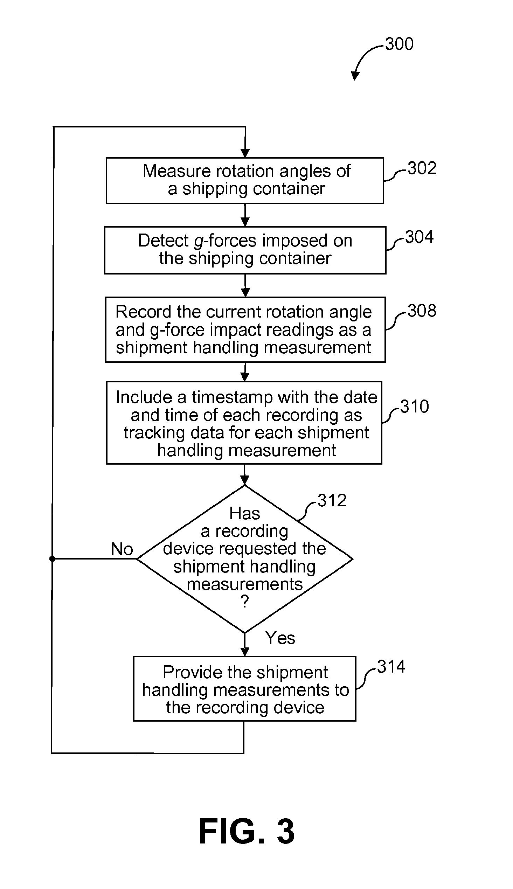

FIG. 3 is a flow diagram illustrating a method 300 for monitoring a container using the shipping container system of FIG. 1. The method 300 addresses monitoring and tracking shipment handling measurements with the RAID 104 to provide the recording device 106 with accountability information on each of the various shippers during shipment of the shipping container 102. At block 302, the RAID 104 measures rotation angles of the shipping container 102. At block 304, the RAID 104 detects g-forces imposed on the shipping container 102. The RAID 104 records the current rotation angle and g-force readings as a shipment handling measurement at block 308. The RAID 104 includes tracking data in each shipment handling measurement at block 310. The tracking data includes a timestamp with the date and time of each shipment handling measurement recording. The RAID 104 continues to record additional shipment handling measurements at the prescribed sampling interval rate when the recording device 106 requests the shipment handling measurement recordings at block 312. At block 314, the RAID 104 provides the recording device 106 with the shipment handling measurements for assigning respective shipment handling readings to one or more parties responsible in handling the shipping container 102 during shipment.

While the methods and techniques described here have been described in the context of a fully functioning shipping container system (for example, the system 100 of FIG. 1), apparatus embodying these methods and techniques are capable of being distributed in the form of a computer-readable medium of program instructions on a programmable processor and a variety of forms that apply equally regardless of the particular type of signal bearing media actually used to carry out the distribution. Examples of computer-readable media include recordable-type media, such as a portable memory device, a hard disk drive, a RAM, CD-ROMs, DVD-ROMs, and transmission-type media, such as digital and analog communications links, wired or wireless communications links using transmission forms, such as, for example, radio frequency and light wave transmissions. The computer-readable media will take the form of coded formats that are decoded for actual use in a particular shipping container rotation angle and impact detector and a particular recording device. For example, the processing of shipment handling readings performed by the computer-readable medium of program instructions in the RAID 104 is also capable of being performed in the recording device 106.

This description has been presented for purposes of illustration, and is not intended to be exhaustive or limited to the form (or forms) disclosed. Variations and modifications may occur, which fall within the scope of the embodiments described above, as set forth in the following claims.

## Claims

1. An electronic data collection system (100), comprising:
a shipping container (102);
an electronic sensor package (200) that periodically detects rotation angles and angular acceleration of the shipping container, the package including:
one or more gyroscopes (216) that record the rotation angles experienced by the shipping container, and
one or more accelerometers (214) that record the angular acceleration as g-forces experienced by the shipping container during potential impacts;
and
a recording device (106) responsive to a plurality of rotation angle and impact recordings from the electronic sensor package, each of the rotation angle and impact recordings comprising a corresponding date and time of occurrence.

2. The system of claim 1, wherein the one or more gyroscopes and the one or more accelerometers are MEMS-based sensors.

3. The system of claim 1, wherein the electronic sensor package comprises at least two gyroscopes and at least three accelerometers.

4. The system of claim 1, wherein the electronic sensor package is permanently mounted in the shipping container.

5. The system of claim 1, wherein the electronic sensor package further comprises:
a microcontroller (202) that records the plurality of rotation angle and impact recordings;
a storage medium (206) responsive to the microcontroller;
a power source (210) that provides power for the electronic sensor package; and
a transmitter (204) that communicates the plurality of rotation angle and impact recordings from the microcontroller to the recording device.

6. The system of claim 5, wherein the microcontroller records the plurality of rotation angle and impact recordings at a prescribed sampling interval rate.

7. The system of claim 5, wherein the transmitter comprises at least one of a wireless transmitter, a USB port, an Ethernet port, and an infrared port.

8. The system of claim 5, wherein the storage medium is at least one of:
a flash memory circuit responsive to the transmitter, and
a removable memory device that communicates the plurality of rotation angle and impact recordings to the recording device.

9. The system of claim 5, wherein the recording device is at least one of a portable handheld computing device, a wireless computing device, and a personal computer that interfaces with the electronic sensor package.

10. The system of claim 9, wherein the recording device correlates each recording stored in the electronic sensor package with at least one assigned party responsible for handling of the shipping container at a time of impact.
